# EUROPEAN PATENT APPLICATION

(11) **EP 2 042 343 A1**
(43) Date of publication of application: **01.04.2009**
(21) Application number: 08253128.6
(22) Date of filing: 25.09.2008
(51) Int. Cl.: B42D 15/10, C09D 7/12, G02B 5/18, C08J 5/00

(54) **Security device, reflective coating and layer therefor, and associated method**

(30) Priority: 25.09.2007 US 974910 P
(71) Applicant: OpSec Security Group, Inc., Denver, CO 80202 (US)
(72) Inventor: Thomas, Matthew D., New Freedom, Pennsylvania 17349 (US); Hill, Dean, New Freedom, Pennsylvania 17349 (US)
(74) Representative: Parry, Simon James

(57) **Abstract**

The present invention relates to a security device for resisting counterfeiting and verifying the authenticity of an article and, more particularly, to a nanoparticle containing coating composition applied thereon to produce a reflective layer for use with diffractive security devices.

## Description

### BACKGROUND OF THE INVENTION

### Field of the Invention

The present invention relates to a security device for resisting counterfeiting and verifying the authenticity of an article and, more particularly, to a nanoparticle-containing coating composition applied thereon to produce a reflective layer.

### Background Information

Security devices which create a change or shift in appearance when observed from different relative observation points are commonly referred to as optically variable devices (OVDs). The evolution of the OVD stems largely from the search for a mechanism to resist counterfeiting of certain articles and products, or alternatively to render such copying obvious. For example, and without limitation, paper money, bank notes, certificates, security labels, product hang tags, drivers' licenses, ID cards, and credit cards, among other things, frequently employ one or more OVDs to resist counterfeiting or to verify authenticity.

A counterfeiting deterrent employed in some OVDs involves the use of one or more images that exhibit optical effects which cannot be reproduced using traditional printing and/or photocopying processes. In some instances, the images comprise holograms wherein when the OVD is viewed from a predetermined observation point, an optical effect results, such as, for example and without limitation, movement or alteration of the holographic image. Diffractive security devices, which are sometimes referred to by the acronym DSD, comprise a subset of OVDs for which the security device has a microstructure adapted to provide the desired optical effect(s) based primarily on principles of light diffraction as opposed, for example, to light refraction. One non-limiting example of a diffractive microstructure is a number of grooves or gratings selectively arranged in a substrate. Typically, it is desirable to include a reflective layer or coating over the diffractive microstructure to achieve the desired diffractive efficiency and thereby create the intended optical effect(s).

Although the use of diffractive security devices, including holograms, in anti-counterfeiting and anti-fraud applications is generally known, the methodology for producing diffractive security devices has heretofore been limited. Specifically, methods for providing diffractive security devices have traditionally included the steps of: (1) originating a master security image; (2) processing the master security image into a nickel embossing shim; (3) replicating security images from the embossing shim, into a substrate using a suitable micro-embossing method; (4) applying a reflective layer to the micro-embossed surface; and (5) applying an adhesive or protective layer over the reflective layer. It will be appreciated that the order of the foregoing steps could be different. For example, when the embossing method known as "hard embossing" is employed, the order of steps 3 and 4 would be reversed.

The reflective layer is typically one of two different types, namely, an opaque reflective layer or a transparent reflective layer. An opaque reflective layer reflects the majority of incident light and substantially obscures the view of anything there behind, relative to the eye of the observer. The most common material used in this type of reflective layer is aluminum, although other materials such as, for example, chromium, copper, and various alloys are used to a lesser degree in specialized applications. A transparent reflective layer reflects a significant portion of incident light at certain angles and transmits the majority of incident light from other angles. This allows a diffractive image to be placed over printed or graphical information without obscuring the view thereof, and at the same time provides the diffractive efficiency needed for the diffractive image to also be seen by the eye of the observer. The most commonly used materials for this type of reflective layer are zinc sulfide and titanium dioxide. These materials have a high index of refraction relative to the embossed microstructure substrate and, therefore, provide the dual utility of reflection and transmission, depending on the angle of incident light and the observation angle.

Various opaque reflective layers and transparent reflective layers that are known in the art can be produced and/or applied by vacuum deposition, with the most common and cost-effective method being evaporative vacuum deposition. In some specialized applications, the reflective layer is deposited by sputtering vacuum deposition or electron beam-assisted vacuum deposition. While vacuum deposition methods are well established, they are not ideal for the production of diffractive security devices for a variety of reasons as discussed in further detail later herein.

Thus, there is room for improvement in diffractive security devices including coatings applied thereto and reflective layers formed thereon, and in methods associated with the same, and it is therefore an object of the present invention to provide such improved devices, coatings, reflective layers and associated methods.

Accordingly, a first aspect of the present invention provides a coating composition comprising: a plurality of nanoparticles having an average particle size of from 1 nm to 1000 nm; and a liquid vehicle, wherein the coating composition is capable of being cured at atmospheric conditions.

Preferably, the plurality of nanoparticles is selected from the group consisting of metals, metal alloys, metal oxides and mixtures therein.

In a preferred embodiment, the nanoparticles have an average particle size of from 1 nm to 100 nm.

The liquid vehicle is optionally a printing ink.

The coating composition is preferably capable of being cured in the absence of a vacuum chamber.

According to a further aspect of the present invention, there is provided a method of forming a reflective layer on a substrate, the method comprising:
dispersing a plurality of nanoparticles having an average particle size of from 1 nm to 1000 nm in a liquid vehicle to form a coating composition; applying the coating composition to at least a portion of the substrate; and curing the coating composition at atmospheric conditions to form a reflective layer.

Preferably, the substrate is a diffractive microstructure.

The reflective layer preferably provides a desired optical effect when viewed from a number of predetermined relative observation points.

In a preferred embodiment of the method, the nanoparticles have an average particle size of from 1 nm to 100 nm.

Preferably the curing is conducted in the absence of a vacuum chamber.

According to another aspect of the present invention, there is provided a security device comprising:a substrate including a diffractive microstructure; and a reflective layer selectively overlaying at least a portion of the diffractive microstructure, the reflective layer comprising a liquid vehicle and a plurality of reflective nanoparticles mixed within the liquid vehicle, wherein the combination of the diffractive microstructure and the reflective layer provides a desired optical effect when the security device is viewed from a number of predetermined relative observation points.

Preferably, the diffractive microstructure has a period measured by the distance between elements of the diffractive microstructure that are substantially repeated; wherein the reflective nanoparticles have an average particle size; and wherein the average particle size of the reflective nanoparticles is less than the period of the diffractive microstructure.

The average particle size of the reflective nanoparticles preferably ranges from about 1 nm to about 100 nm, and optionally the average size of the reflective nanoparticles ranges from about 5 nm to about 20 nm.

Preferably, the reflective layer is selectively applied to the at least a portion of the diffractive microstructure at atmospheric conditions.

Optionally, the liquid vehicle comprises a printing ink; and wherein the liquid vehicle having the reflective nanoparticles is structured to be selectively applied to the at least a portion of the diffractive microstructure using a printing press.

The security device may further comprise a protective layer overlaying the reflective layer.

According to another aspect of the present invention, there is provided a method of providing a security device, the method comprising:
(a) mixing a plurality of reflective nanoparticles in a liquid vehicle; and
(b) selectively applying the liquid vehicle having the reflective nanoparticles to at least a portion of a diffractive microstructure of a substrate of the security device in order to create a reflective layer.

Preferably, the liquid vehicle is a printing ink; and wherein the method further comprises employing a printing press to perform the step of selectively applying the printing ink having the reflective nanoparticles to the at least a portion of the diffractive microstructure, under atmospheric conditions.

The method of this aspect may further comprise applying a protective layer over the reflective layer.

### BRIEF DESCRIPTION OF THE DRAWINGS

So that the invention may be more readily understood, and so that further features thereof may be appreciated, embodiments of the invention will now be described by way of example, with reference to the accompanying drawing, in which:

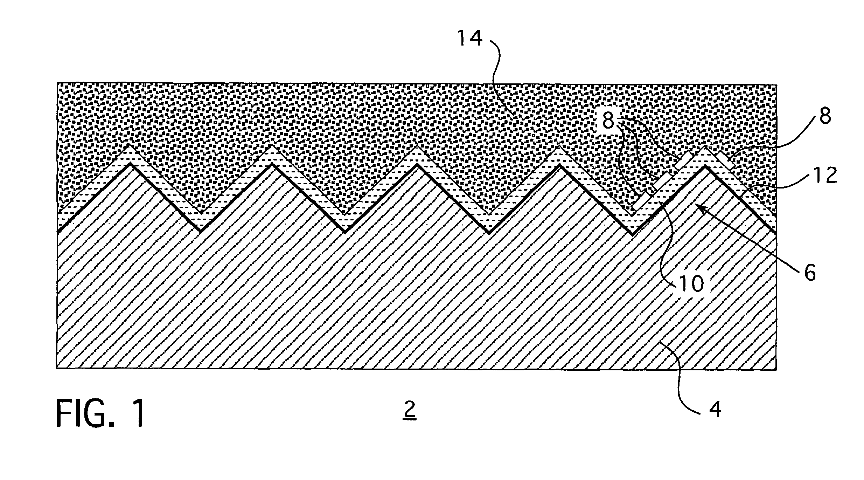

Figure 1 is a simplified and exaggerated sectional view of the layers of a diffractive security device including a nano-reflective layer, in accordance with an embodiment of the invention.

### DESCRIPTION OF THE PREFERRED EMBODIMENTS

As employed herein, the term "optically variable device" (OVD) is used in its conventional broad sense and includes the use of any suitable number and configuration of optical elements (e.g., without limitation, grooves; diffractive grating structures), or images which may or may not be touching each other, overlapping, or physically in close proximity to each other. Thus, the term "security device" as employed herein, refers to any known or suitable device which employs one or more OVDs in order to verify the authenticity of the article on which the security device is disposed, and/or to deter and resist copying or counterfeiting of the article.

As employed herein, the phrases "optical effects," "visual effects," "diffractive effects" and derivatives thereof, refer to the visual characteristics, such as, for example and without limitation, appearance and disappearance of an image, change in observed color, rate of color change, change in shape and/or dimension, magnification, movement or animation, transformation from one such optical effect to another, and any suitable combination of the foregoing, which are exhibited by the OVD(s) as defined herein, and thus, are observed either by the naked eye or by machine when viewing the same from a predetermined relative observation point or points.

As employed herein, the terms "article" and "informational article" refer to an item or product on which OVDs in accordance with embodiments of the invention are employed.

As employed herein, the term "number" means one or an integer greater than one (i.e., a plurality).

The invention is directed to a nanoparticle-containing coating composition and its application to a substrate such as a diffractive microstructure, to form a nano-reflective layer for diffractive security devices, using a method which overcomes the disadvantages associated with conventional techniques (such as vacuum deposition).

The use of vacuum deposition is advantageous to create a reflective layer on diffractive images because it allows for thin molecular layers of the reflective materials to be applied directly to the microstructure in a smooth continuous manner relative to the scale of the microstructure features. However, among the disadvantages associated with vacuum deposition are the following: (1) in order for the vacuum deposition process to be efficient and cost effective, relatively large volumes of material must be coated in a single run; (2) the majority of available vacuum deposition equipment is designed to handle relatively large rolls of material, for example, having a width that is wider than desired for the production of diffractive security devices; (3) the entire surface area of the exposed side of the material is coated, therefore, if areas of the substrate are required or desired not to be reflective, or to have varying levels of reflectivity, then such areas will need further processing such as, for example, the additional steps of re-registered overprinting with opaque inks and/or being selectively "demetalized" to remove portions of the reflective coating; (4) although there are some highly specialized processes for preventing undesired deposition in specific pretreated areas, they tend to be cost prohibitive and less efficient than the standard vacuum deposition processes in relatively small runs or batches; (5) the majority of available vacuum deposition equipment is designed to apply a single material throughout a production run, and changing from one deposition material to another disadvantageously requires substantial cleaning of the vacuum chamber, loading a new roll, pumping down the vacuum chamber, and establishing new process control settings, among other things; and (6) typically, the existing equipment also does not allow for combinations of different reflective materials on the same substrate.

The present invention overcomes these and other disadvantages by employing conventional printing or coating techniques in a manner previously thought not to be possible, outside of the vacuum chamber, under standard ambient or atmospheric air conditions. In other words, the invention provides a new and improved diffractive security device, the development of which, in large part, was counterintuitive to the conventional wisdom of those skilled in the art. Specifically, diffractive security devices in accordance with the invention exhibit are made using conventional printing or coating techniques, outside of a vacuum chamber. Yet, the diffractive security devices in accordance with the present invention exhibit at least one of the following advantages: (i) enhanced visual impact and security value, (ii) increased production efficiency, and (iii) lower cost, among other advantages.

The reflective layer on a diffractive security device can be produced by mixing reflective pigments or particles in a liquid vehicle (e.g., without limitation, an ink or lacquer vehicle medium) in a predetermined manner to produce a coating composition, and then applying the coating composition to a diffractive microstructure and, upon drying or curing, properly aligning the reflective pigments parallel to the surfaces of the diffractive features (e.g., without limitation, grooves; grating structure) of the microstructure. This process allows for the reflective layer to be applied by conventional printing or coating techniques. However, extensive testing has proved this to be an impractical option. Further development has led to the realization that, if the reflective pigments or particles are made to be small enough relative to the size of the microstructure features, and the reflective pigments or particles are sufficiently dispersed in the liquid vehicle, then the above-mentioned alignment step can be eliminated and the process becomes relatively simple and practical to practice.

By way of a non-limiting example, testing has shown that silver nanoparticles having an average particle size in the range of from about 5 nanometers (nm) to about 20 nm, when properly dispersed in an ink vehicle to form a coating composition and when applied to a suitable diffractive microstructure to produce a reflective layer thereon, does, in fact, provide the desired properties of an opaque reflective layer. In addition, high refractive index nanoparticles of the same general size range when dispersed in an ink vehicle results in a coating and a subsequent reflective layer that successfully achieve the desired properties of a transparent reflective layer.

In general, the term "nanoparticle" as used herein can include particle sizes of from about 1 to about 1000 nanometers (nm) and more typically from about 1 to about 100 nm. Further, nanoparticles generally have a high surface to volume ratio which can make the particles very reactive when used in small amounts. In the present invention, suitable pigments or particles for use in the coating composition may include a plurality of nanoparticles having average particle size within the above mentioned ranges, i.e., about 1- about 1000 nm or about 1- about 100 nm. The average particle size can depend on various factors such as the specific nanoparticle material used, and/or the article or structure to be coated with the nanoparticle coating composition. In an embodiment, the average particle size can range from about 5 to about 20 nm. In this embodiment, the resulting coating composition can be used to coat diffractive microstructures with a period of about 0.2 microns to about 5 microns. The term "period" refers to the measured distance between elements of a diffractive microstructure that are substantially repeated. In another embodiment of the present invention, the nanoparticles have an average particle size that is less than the period of the diffractive microstructure. In a further embodiment, the ratio of the average particle size of the nanoparticles to the period of the diffractive microstructure is at least 0.1.

Suitable materials for the nanoparticles can include a wide variety of known materials including metals, metal alloys and metal oxides such as but not limited to silver, aluminum, nickel, chromium, copper, zinc sulfide, titanium dioxide, aluminum oxide and, mixtures or combinations thereof. A plurality of nanoparticles can be dispersed in a liquid vehicle to form a coating composition, and the coating composition can be applied to a diffractive microstructure to produce a reflective layer thereon. Suitable liquid vehicles for use in the present invention can include a wide variety of those known in the art, including but not limited to waterborne compositions, solvent-based compositions, and inks such as printing inks. The quantity of nanoparticles and the volume of liquid vehicle can vary widely. Typically, an effective amount of nanoparticles is used. That is, the quantity of nanoparticles is that quantity which is necessary to impart in the resulting coating or layer the desired visual properties or optical effects when viewed from a number of predetermined relative observation points. The quantity can depend on a variety of factors, such as the specific material of the nanoparticles and/or the other components present in the coating composition. The liquid vehicle can be present in varying amounts. In an embodiment, the amount of liquid vehicle is such that the nanoparticles can be properly dispersed therein.

In the present invention, dispersing of the nanoparticles in a liquid vehicle can be accomplished by various methods. For example, the nanoparticle material can be combined with the liquid vehicle and subsequently mixed using an ultrasonic mixer.

Without intending to be bound by any particular theory, it is believed that dispersion of the nanoparticles in the coating composition of the present invention obviates the need for proper alignment or orientation of the particles in a particular manner therein (as is necessary in various known methods) to produce a reflective layer having the desired visual properties and optical effects.

The coating composition of the present invention is typically in the form of a liquid dispersion that can be applied to a substrate using a variety of conventional techniques known in the coatings art. Suitable techniques can include but are not limited to spraying, painting, dipping, wiping, rolling, printing and the like. Various printing techniques can include but are not limited to flexographic, gravure and ink-jet printing. In a preferred embodiment, the coating composition is applied using a printing press. Suitable substrates can include a wide variety of materials known in the art for producing security devices such as polymers, polyurethanes, polyureas and mixtures thereof. In an embodiment, the substrate includes a diffractive microstructure.

Following application to the substrate, the coating can be allowed to dry or cure. The drying or curing process can include a wide variety of temperatures. For example, the coating can be dried at ambient temperature conditions, and is typically dried or cured at elevated temperatures to form a reflective layer. Further, drying or curing of the coating can include the use of actinic radiation such as ultraviolet radiation. The nano-reflective layer of the present invention can be formed in the atmosphere, e.g., under atmospheric or ambient air conditions, in the absence of, or outside of, a vacuum chamber. The present invention obviates any need to use vacuum deposition methods to produce the reflective layer.

The coating composition produced from dispersing the nanoparticles in a liquid vehicle can be applied to at least a portion of a diffractive micro-structure. In an embodiment, essentially the entire diffractive micro-structure is coated. In other embodiments, only specific predetermined portions of the diffractive micro-structure are coated.

The nanoparticle coating of the present invention can be applied to a diffractive microstructure in varying quantities. The coating is typically applied in a quantity such that the thickness of the resulting reflective layer provides the desired reflective properties and optical effect. In an embodiment, the nanoparticle coating can be applied in an amount such that the resulting nano-reflective layer has a thickness of from about 5 µm to about 10µm, or from about 300 Å to about 1000 Å.

A variety of known coatings can be optionally applied prior to or following application of the nanoparticle-containing coating of the present invention. For example, an absorber layer and/or a dielectric layer may be applied prior to application of the nanoparticle coating. Further, for example, following application of the nanoparticle coating, an adhesive layer and/or protective layer may be applied over the resulting reflective layer. However, since the nanoparticle containing reflective layer of the present invention produces the desired optical effect when viewed from a number of predetermined relative observation points, it is not necessary to apply any additional coatings to the diffractive microstructure.

In an embodiment of the present invention, the liquid vehicle can include resin, solvent, and additives. The resin can include any known natural or synthetic resin material. The solvent can include any compounds typically known for use as solvents in coating compositions. In an embodiment, the coating composition is a waterborne coating and therefore, the solvent is water. Suitable additives can include adjuvants that are known to one of ordinary skill in the coatings formulation art such as but not limited to surfactants, fillers, binders, color arts and the like.

Figure 1, shows a non-limiting embodiment, which is provided for illustrative purposes only. The security device 2 includes a substrate 4 having a diffractive microstructure 6 selectively formed therein using any known or suitable process. The substrate 4 can include a wide variety of materials known in the art for the purpose of forming a diffractive microstructure therein. The aforementioned nanoparticles 8 are mixed within a suitable liquid vehicle 10, in a predetermined manner corresponding to the optical effect which is desired. The nanoparticle 8, liquid vehicle 10 composition is then applied to the diffractive microstructure 6 to form the desired reflective layer 12. A suitable adhesive or protective layer 14 may then be optionally applied over the reflective layer 12, if desired.

It will be appreciated that the example of Figure 1 is provided for illustrative purposes only and is not intended to limit the scope of the invention in any way. It will also be appreciated that the elements of Figure 1 are only partially shown, and are illustrated in simplified and exaggerated form, for simplicity of illustration. For example, in reality, the diffractive microstructure 6 could have any known or suitable configuration, and the reflective layer 12, which may also be synonymously referred to as a reflective coating 12, could be selectively applied to any desired portion(s) of the microstructure 6, as opposed to covering the entire microstructure 6, as shown. Additionally, only four nanoparticles 8 are shown in exaggerated simplified form in Figure 1. In reality, a plurality of nanoparticles 8 would be mixed within the liquid vehicle 10 in any desired quantity and manner.

Particularly unique and advantageous is the ability of the coating composition to produce a reflecting layer 12 that can be applied to specific portions of the diffractive microstructure 6 using a multi-station printing press (not shown) to create unique visual effects. Thus, the invention can improve the efficiency of production of known diffractive security devices, as well as potentially create a new class of visual security devices. Accordingly, a security device in accordance with the present invention provides an anti-counterfeiting tool that is visually distinctive and recognizable, so as to effectively minimize or preclude the existing capabilities of counterfeiting entities.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A coating composition comprising:
a plurality of nanoparticles having an average particle size of from 1 nm to 1000 nm; and
a liquid vehicle,
wherein the coating composition is capable of being cured at atmospheric conditions.

2. The coating composition of Claim 1 wherein the plurality of nanoparticles is selected from the group consisting of metals, metal alloys, metal oxides and mixtures thereof.

3. The coating composition of Claim 1 wherein the nanoparticles have an average particle size of from 1 nm to 100 nm.

4. The coating composition of Claim 1 wherein the liquid vehicle is a printing ink.

5. The coating composition of Claim 1 wherein the coating composition is capable of being cured in the absence of a vacuum chamber.

6. A method of forming a reflective layer on a substrate, comprising:
dispersing a plurality of nanoparticles having an average particle size of from 1 nm to 1000 nm in a liquid vehicle to form a coating composition;
applying the coating composition to at least a portion of the substrate; and
curing the coating composition at atmospheric conditions to form a reflective layer.

7. The method of Claim 6 wherein the substrate is a diffractive microstructure.

8. The method of Claim 6 wherein the reflective layer provides a desired optical effect when viewed from a number of predetermined relative observation points.

9. The method of Claim 6 wherein the nanoparticles have an average particle size of from 1 nm to 100 nm.

10. The method of Claim 6 wherein the curing is conducted in the absence of a vacuum chamber.

11. A security device comprising:
a substrate including a diffractive microstructure; and
a reflective layer selectively overlaying at least a portion of the diffractive microstructure, the reflective layer comprising a liquid vehicle and a plurality of reflective nanoparticles mixed within the liquid vehicle,
wherein the combination of the diffractive microstructure and the reflective layer provides a desired optical effect when the security device is viewed from a number of predetermined relative observation points.

12. The security device of claim 11, wherein the diffractive microstructure has a period measured by the distance between elements of the diffractive microstructure that are substantially repeated; wherein the reflective nanoparticles have an average particle size; and wherein the average particle size of the reflective nanoparticles is less than the period of the diffractive microstructure.

13. The security device of claim 12, wherein the average particle size of the reflective nanoparticles ranges from about 1 nm to about 100 nm.

14. The security device of claim 11, wherein the average size of the reflective nanoparticles ranges from about 5 nm to about 20 nm.

15. The security device of claim 11, wherein the reflective layer is selectively applied to the at least a portion of the diffractive microstructure at atmospheric conditions.

16. The security device of claim 11, wherein the liquid vehicle comprises a printing ink; and wherein the liquid vehicle having the reflective nanoparticles is structured to be selectively applied to the at least a portion of the diffractive microstructure using a printing press.

17. The security device of claim 11, further comprising a protective layer overlaying the reflective layer.

18. A method of providing a security device, the method comprising:
(a) mixing a plurality of reflective nanoparticles in a liquid vehicle; and
(b) selectively applying the liquid vehicle having the reflective nanoparticles to at least a portion of a diffractive microstructure of a substrate of the security device in order to create a reflective layer.

19. The method of claim 18, wherein the liquid vehicle is a printing ink; and wherein the method further comprises employing a printing press to perform the step of selectively applying the printing ink having the reflective nanoparticles to the at least a portion of the diffractive microstructure, under atmospheric conditions.

20. The method of claim 18, further comprising applying a protective layer over the reflective layer.
